# EUROPÄISCHE PATENTSCHRIFT

(11) **EP 0 864 190 B1**
(45) Veröffentlichungstag und Bekanntmachung des Hinweises auf die Patenterteilung: **03.01.2001**
(21) Anmeldenummer: 97943897.5
(22) Anmeldetag: 24.09.1997
(51) Int. Cl.: H01S 3/109

(54) **FREQUENZVERDOPPELTER DIODENGEPUMPTER FESTKÖRPERLASER**
FREQUENCY-DOUBLING DIODE-PUMPED SOLID-STATE LASER
LASER A SOLIDE A POMPAGE PAR DIODE ET A DOUBLAGE DE FREQUENCE

(30) Priorität: 27.09.1996 DE 19639769
(43) Veröffentlichungstag der Anmeldung: 16.09.1998
(73) Patentinhaber: Lasos Lasertechnik GmbH, 07745 Jena (DE)
(72) Erfinder: NÄGELE, Martin, D-28201 Bremen (DE); PFEIFER, Egon, D-28355 Bremen (DE); STANKOV, Krassimir, D-28357 Bremen (DE)
(74) Vertreter: Niestroy, Manfred
(86) Internationale Anmeldenummer: EP9705241
(87) Internationale Veröffentlichungsnummer: WO9813911

(56) Entgegenhaltungen:
- EP-A- 0 596 714
- DE-A- 4 132 063
- DE-A- 4 205 587
- US-A- 5 539 765
- MATTHEWS D G ET AL: "BLUE MICROCHIP LASER FABRICATED FROM ND:YAG AND KNBO3" OPTICS LETTERS, Bd. 21, Nr. 3, 1.Februar 1996, Seiten 198-200, XP002020296

## Beschreibung

### Gebiet der Erfindung

Die Erfindung bezieht sich auf einen frequenzverdoppelten diodengepumpten Festkörperlaser mit resonatorinterner Frequenzverdopplung, umfassend ein lasendes Festkörpermedium mit geeigneten reflektierenden Belägen, welches einen Bestandteil einer Resonatorkavität darstellt, mindestens eine als Laserdiode ausgebildete Pumplichtquelle zur Erzeugung geeigneter Pumplichtstrahlung, ein frequenzverdoppelndes nichtlineares optisches Element im Form eines nichtlinearen Kristalls mit geeigneten reflektierenden Beschichtungen, welches einen weiteren Bestandteil der Resonatorkavität bildet, wobei die Resonatorkavität zwischen reflektierenden Beschichtungen des Festkörpermediums und des frequenzverdoppelnden Elements gebildet ist und optische Mittel, die der Pumplichtquelle nachgeordnet sind und die Pumpstrahlung an das lasende Medium leiten.

### Stand der Technik

Derartige Laser weisen ein eigenes charakteristisches Rauschverhalten auf, welches bedingt ist durch die kombinierte Wirkung von nichtlinearen Vorgängen, wie z.B. eine Frequenzverdopplung, die Mischung der longitudinalen Moden sowie das räumliche "Lochbrennen" (spatial-hole-burning) im aktiven lasenden Medium. Dieses Merkmal ist bekannt als das "grüne Problem" (green problem) bei intern frequenzverdoppelten Lasern. Das Rauschverhalten ist gekennzeichnet durch eine periodische Änderung der Amplitude des Lichtes um einige zehn bis einige hundert Kilohertz oder durch unregelmäßige Fluktuationen. Die Amplitude des Rauschens erstreckt sich von einigen Prozenten bis zu 100 % der Modulation. Nichtlineare Kristalle, wie sie bei Festkörperlasern eingesetzt werden, besitzen Absorptionsverluste bei der Strahlung mit der Grundfrequenz und bei der frequenzverdoppelten Strahlung, welche zu einer unerwünschten Erwärmung des nichtlinearen Kristalls führen. Die dabei auftretenden Temperaturänderungen in der Zentralzone des Laserstrahls können mehrere Hundert °K erreichen. Durch die auftretenden Temperaturen und deren Verteilung über den Querschnitt des nichtlinearen frequenzverdoppelnden Kristalls tritt an diesem eine Verstimmung auf, so daß eine optimale Phasenanpassung nicht erfolgen kann mit dem Ergebnis, daß die frequenzverdoppelte Strahlung in ihrer Leistung herabgesetzt ist. Das bedeutet, daß fast alle bekannten frequenzverdoppelten Festkörperlaser nicht optimal arbeiten.

Es sind verschiedene Methoden zur Beseitigung oder zur Unterdrückung des Rauschens und zur Verringerung dieser Nachteile bekannt geworden.

So ist in der Zeitschrift "Optics Letters", vol.16 (1991), Seiten 1665 ff ("Single-londitudinal-mode operation and second harmonic generation of Nd:YVO₄ microchip laser") ein Verfahren beschrieben, welches auf Frequenzselektion und Einzelmodenbetrieb beruht. Da es keine Wechselwirkung der longitudinalen Moden im Einzelmodenbetrieb gibt, ist das "grüne" Rauschen eliminiert. So gibt es nur eine oszillierende Mode, und das durch das sog. "grüne Problem" bedingte Rauschen wird virtuell eliminiert. Nachteilig dabei ist der relativ komplizierte Aufbau des Resonators mit dem Ziel, die Realisierung eines Einzelmodenbetriebes (single longitudinal mode) zu ermöglichen. In manchen Fällen wird eine solche rauscharme Funktion eines solchen Lasers durch Verwendung eines Typ-II-nichtlinearen Kristalls (KTP oder KTiOPO₄) als Teil eines doppelbrechenden Filters, z.B. eines Lyot-Filters, erreicht ("Optics Letters", vol. 13, (1988), Seiten 805 bis 807).

Ein in der US-Patentschrift 4,933,947 beschriebener intracavity-frequenzverdoppelter Laser weist eine verbesserte Amplitudenstruktur auf, die im wesentlichen dadurch erreicht wurde, daß das "Lochbrennen" (Spatial-Hole-Burning) in dem lasenden Material durch Anwendung von λ/4-Platten eliminiert und der optische Resonator des Lasers bei einer solchen Temperatur gehalten wurde, die zu einer im wesentlichen rauscharmen Erzeugung der optischen Strahlung führte. Dazu ist jedoch eine gesonderte Thermostabilisierung der Anordnung in Abhängigkeit vom Rauschpegel der Strahlung erforderlich.

Aus der DE-Offenlegungsschrift 42 05 587 Al ist ein frequenzverdoppelter Single-Frequency-Laser bekannt, bei welchem unter anderem eine Laserdiode, ein mit seltenen Erden dotierter Laserkristall und ein frequenzverdoppelndes Material in einem gemeinsamen Resonator verwendet werden. Diese Einrichtung erzeugt eine stabile grüne optische Strahlung und weist die durch das "Spatial-Hole-Burning" bedingten Probleme nicht auf, so daß am Ausgang des Lasers eine Single-Frequency-Mode vorhanden ist.

Eine stabile rauscharme Funktion des Lasers wird in einem engen Temperaturbereich erreicht, der durch eine geeignete elektronische Schaltung realisiert wird. Nachteilig ist der doch komplizierte Aufbau des Resonators, welcher die breite Anwendung dieses Lasertyps beeinträchtigt.

Aus der WO 95/21480 und aus der US-Patentschrift 5,446,749 ist ein diodengepumpter Laser bekannt, bei dem die intern resonatorische Frequenzverdopplung einer großen Anzahl von longitudinalen Moden ausgenutzt wird, um das Rauschen zu unterdrücken und eine hohe Amplitudenstabilität zu erreichen. Die Länge des Resonators ist dabei für etwa 100 Moden ausgelegt. Nachteilig ist bei dieser Lösung, daß eine Resonatorlänge von über einem Meter erforderlich ist, was für viele Anwendungen nicht praktikabel ist und den Einsatz- oder Anwendungsbereich als Hochleistungslaser einschränkt.

### Beschreibung der Erfindung

Es ist Aufgabe der Erfindung, einen die Nachteile des Standes der Technik beseitigenden, frequenzverdoppelten diodengepumpten Festkörperlaser zu schaffen, welcher einen einfachen Aufbau besitzt und ein geringes Volumen einnimmt und bei dem das Rauschen weitestgehend unterdrückt ist.

Erfindungsgemaß wird diese Aufgabe bei einem frequenzverdoppelten diodengepumpten Festkörperlaser dadurch gelöst, daß jeweils mindestens eine Apertur aus thermisch leitendem Material am frequenzverdoppelnden Element und/oder am lasenden Festkorpermedium vorgesehen ist und daß das frequenzverdoppelnde optische Element für eine Phasenanpassung bei einer höheren Temperatur als die Temperatur der Umgebung ausgelegt ist.

So ist es vorteilhaft, wenn die thermisch leitende Apertur so dimensioniert ist, daß eine einzelne transversale Mode TEMₒₒ realisiert ist.

Es ist ferner vorteilhaft, wenn die thermisch leitenden Aperturen, die eine gute Wärmeableitung bewirken, auf beiden Endflächen des frequenzverdoppelnden Elementes angeordnet sind, wobei dieses Element ein Kristall aus Kaliumtitanylphosphat (KTP), einem hoch-nichtlinearen Material, oder aus Ammoniumdihydrogenphosphat (ADP), Lithiumtriborat (LBO), Lithiumjodat oder anderen geeigneten Materialien, wie sie in der US-Patentschrift 5,164,947 angegeben sind, besteht. Das lasende Festkörpermedium, der eigentliche Laserkristall, besteht vorteilhaft aus Nd:YAG; Nd:YVO₄; Nd:LSB oder aus anderen an sich bekannten geeigneten Materialien.

Zur Realisierung günstiger thermischer Bedingungen in der gesamten Resonatorkavität zu der unter anderem der Laserkristall und das frequenzverdoppelnde Element, welches ebenfalls ein Kristall ist, gehören, trägt auch das Merkmal bei, nach dem der Laserkristall und das frequenzverdoppelnde Element in thermischem Kontakt mit der thermisch leitenden Apertur stehen.

Der Laserkristall als aktives lasendes Medium ist an seinen Enden mit geeigneten reflektierenden bzw. transmittierenden Beschichtungen versehen; desgleichen das frequenzverdoppelnde Element. So ist eine erste Fläche des Laserkristalls, die der dem Laserkristall vorgeordneten Pumplichtquelle zugewandt ist, mit einer Beschichtung belegt, die hoch durchlässig ist für die von der Pumplichtquelle ausgesandte Pumpstrahlung, jedoch hoch reflektierend ist für die durch das lasende Material erzeugte Laserstrahlung mit einer Grundfrequenz bzw. Grundwellenlange. Die andere, der genannten ersten Fläche gegenüberliegende Fläche des Laserkristalls ist mit einer Entspiegelungsschicht versehen, die es ermöglicht, daß die Laserstrahlung mit der Grundwellenlänge verlustarm aus dem Laserkristall austreten kann.

Das nichtlineare, die Frequenz der aus dem Laserkristall austretenden Laserstrahlung verdoppelnde Element, der nichtlineare Kristall, ist an seiner dem Laserkristall zugewandten Fläche mit einer für die Laserstrahlung wirksamen Entspiegelungsschicht (Antireflexionsschicht) belegt. Die gegenüberliegende Fläche dieses Elementes ist mit einer die Laserstrahlung mit Grundwellenlänge hoch reflektierenden Beschichtung versehen Für die im Element selbst gebildete und bezüglich der Frequenz gewandelte Strahlung mit der halben Wellenlänge bzw mit der doppelten Frequenz der Strahlung des lasenden Kristalls ist diese besagte gegenüberliegende Fläche mit einem Belag versehen, der ein verlustarmes Austreten der frequenzverdoppelten Strahlung aus dem Element ermoglicht. Dadurch wird unter anderem auch erreicht, daß es zu keiner großen, Strahlungsverluste verursachenden Erwärmung sowohl des Laserkristall als auch des frequenzverdoppelnden Elementes kommt.

Bei der erfindungsgemäßen Lösung ist zur Phasenanpassung der frequenzverdoppelnde Kristall für die Arbeit bei höheren Temperaturen ausgelegt und vorgesehen, d.h. bei Normaltemperaturen wird eine nicht optimale Phasenanpassung bei der Frequenzverdopplung im Kauf genommen. Sobald das lasende Medium des Lasers Strahlung aussendet, steigt die Temperatur im Laserkristall an, was durch die Absorption sowohl der Laserstrahlung als auch der in ihrer Frequenz verdoppelten Strahlung in diesem Element bedingt ist. Damit wird bei dem erfindungsgemäßen Festkörperlaser die Phasenanpassung immer optimaler und die Leistung der in ihrer Frequenz verdoppelten Strahlung steigt weiter kontinuierlich bis zu einem Temperaturoptimum an.

Dieser Vorgang der Selbstoptimierung läuft weiter, bis eine optimale Phasenanpassung erreicht ist. Ist bei dem Festkörperlaser ein hoher Wirkungsgrad bei der Erzeugung der frequenzverdoppelten Strahlung erreicht, stabilisiert sich auch die Temperatur des frequenzverdoppelnden Elementes. Durch diesen selbstoptimierenden Prozeß erreicht der Laser einen stabilen optimalen Betriebszustand, welcher sich in einem wesentlich verminderten Rauschen ausdrückt.

### Kurze Beschreibung der Zeichnungen

Die Erfindung soll nachstehend an einem Ausführungsbeispiel näher erläutert werden. In der zugehörigen Zeichnung zeigen:
- Fig.1: einen erfindungsgemäßen Festkörperlaser als Blockschaltbild
- Fig.2: einen Schnitt durch einen solchen Laser
- Fig.3: ein frequenzverdoppelndes Element mit Apertur
- Fig.4: die Halterung für das lasende Festkörpermedium
- Fig.5: die Pumpeinrichtung mit einer Laserdiode
- Fig.6: die Tempertur der Kavität über dem Durchmesser der Öffnung der Apertur

### Ausführliche Beschreibung der Zeichnungen

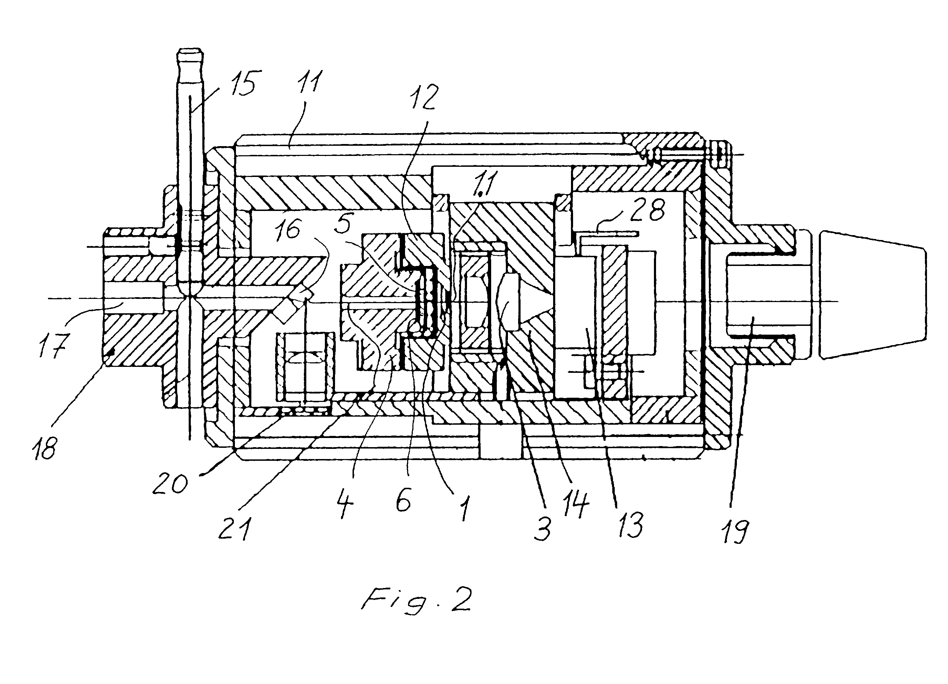

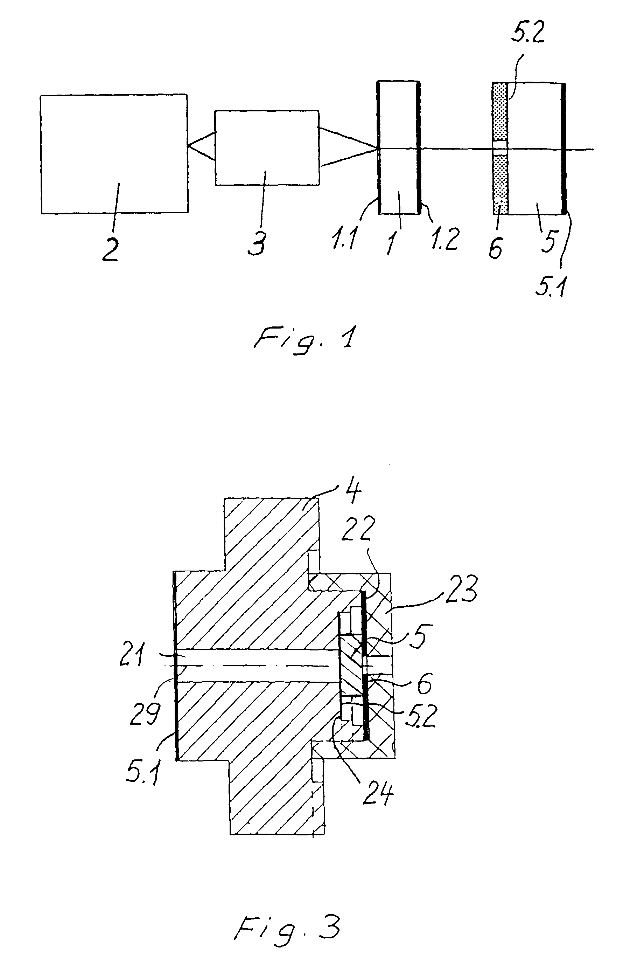

Der in Fig.1 als Blockschaltbild dargestellte frequenzverdoppelte diodengepumpte Festkörperlaser umfaßt ein lasendes Festkörpermedium 1 mit geeigneten reflektierenden bzw. transmittierenden Beschichtungen 1.1; 1.2 und ist als Laserkristall ausgebildet. Dieser Laserkristall besteht beispielsweise aus Nd:YAG; Nd:YAP; Nd:YVO₄; Nd:GdWO₄ oder Nd:LSB und ist Bestandteil einer Resonatorkavität.

Es ist ferner eine Pumplichtquelle 2 zur Erzeugung geeigneter Pumplichtstrahlung vorgesehen, um das Festkörpermedium 1 dazu anzuregen, Laserstrahlung zu erzeugen Dabei ist es vorteilhaft, wenn als Pumplichtquelle 2 mindestens eine Laserdiode zur Anwendung kommt. Zwischen dem lasenden Festkörpermedium 1 und der Pumplichtquelle 2 sind optische Mittel 3 angeordnet, welche die Pumplichtstrahlung auf das lasende Medium 1 übertragen. Diese optischen Mittel 3 können z.B. Lichtleiter oder Linsen sein.

Gleichfalls Bestandteil der Resonatorkavität ist ein die Frequenz der den Laserkristall verlassenden Laserstrahlung verdoppelndes nichtlineares optisches Element 5, beispielsweise in Form eines nichtlinearen Kristalls aus KTP; KDP; LBO; ADP oder LilO₃, welches vorteilhaft mit geeigneten reflektierenden Schichten 5.1 belegt ist. Dieses Element 5 ist so ausgelegt, daß eine optimale Phasenanpassung bei einer höheren Temperatur als die Umgebungstemperatur erfolgt. Zwischen den Beschichtungen 1.1 des lasenden Mediums 1 und den Schichten 5.1 des optischen Elementes 5 ist der Bereich der Resonatorkavität gelegen. In einem engen thermischen Kontakt mit dem frequenzverdoppelnden Element 5 und/oder auch mit dem lasenden Festkörpermedium 1 ist eine Apertur 6 aus thermisch leitendem Material vorgesehen. Diese Apertur 6 kann z.B. eine Folie aus Indium oder einem anderen geeigneten Material sein, welche eine zentrale Öffnung 7 besitzt, durch die erzeugte Strahlung hindurch treten kann.

Die Beschichtungen der einzelnen Flächen sind vorteilhaft wie folgt vorzunehmen: Die Fläche des lasenden Festkörpermediums 1, welche der Pumplichtquelle 2 zugewandt ist, wird mit einer für die Pumplichtstrahlung hoch transparenten, jedoch für die Laserstrahlung hochreflektierenden Schicht 1.1 bedampft. Die andere Fläche des Festkorpermediums 1 ist mit einer für die Laserstrahlung durchlässigen Schicht 1.2 zur Entspiegelung belegt. Um einen guten verlustarmen Übergang des Laserlichtes in das frequenzverdoppelnde Element 5 zu gewährleisten, ist die dem lasenden Festkorpermedium 1 zugewandte Fläche 5.2 des Elementes 5 mit einer Antireflexionsschicht versehen.

Die andere Fläche des Elementes 5 besitzt eine für die Wellenlänge der Laserstrahlung undurchsichtige Schicht 5.1, die jedoch für die in ihrer Frequenz verdoppelte bzw. in ihrer Wellenlänge halbierte Strahlung des Elementes 5 hoch durchlässig ist.

Der in Fig.2 im Schnitt dargestellte Festkörperlaser besitzt ein Gehäuse 10 mit einem Kühlkörper 11, in welchem in einem Halter 12 das lasende Festkörpermedium 1 (Laserkristall) angeordnet ist. Als Pumplichtquelle 2 ist eine Laserdiode 13 axial fluchtend zum Laserkristall im Gehäuse 10 angeordnet. Zwischen der Laserdiode 13 und dem lasenden Festkörpermedium 1 sind die die Pumplichtstrahlung auf den Laserkristall übertragenden optischen Mittel 3 gelegen. Ein Peltierelement 14, mit welchem die Laserdiode 13 thermisch eng verbunden ist, dient der Temperatureinstellung im Gehäuse 10 und damit auch in der gesamten Resonatorkavität. Bei der erfindungsgemäßen Losung wird einmalig vor der Montage des Lasers diejenige Temperatur ermittelt, bei der das Rauschen der Ausgangsstrahlung am geringsten ist. Auf diese Temperatur wird dann während der Arbeit des Lasers die Kavität immer wieder mit Hilfe des Peltierelementes 14 eingestellt.

An der der Laserdiode 13 abgewandten Seite des lasenden Mediums 1 ist der Halter 4 für das frequenzverdoppelnde Element 5 vorgesehen. An ihr ist die Apertur 6 aus thermisch gut leitendem Material, z.B. Indium oder einem anderen geeigneten Werkstoff, angeordnet.

Das von dem lasenden Festkorpermedium 1 erzeugte und durch das Element 5 in seiner Frequenz verdoppelte Licht wird über einen Strahlenteiler 16 durch eine Öffnung 17, die von einem Verschluß 1 5 abschließbar ist, nach außen abgestrahlt. Ein Teil des abgestrahlten Lichtes wird durch den Strahlenteiler 16 auf eine Monitordiode 20 gelenkt, mit der u.a. der Betriebszustand der Laseranordnung angezeigt werden kann. An beiden Seiten des Gehäuses 10 sind Abschlußdeckel 18 und 19 vorgesehen, mit denen dieses abgeschlossen werden kann.

Wie aus Fig.3 ersichtlich, ist das frequenzverdoppelnde Element 5 in dem Halter 4 angeordnet, der mit einer zentralen Bohrung 21 versehen ist, durch welche das Licht über den Strahlenteiler 16 (vgl. Fig.2) und die Öffnung 17 (ebenfalls Fig.2) nach außen abgestrahlt wird. Die thermisch gut leitende Apertur 6 ist mit ihrer einen Seitenfläche mit der einen Stirnfläche 22 des Halters 4 und mit ihrer anderen Seitenfläche mit einem Deckel 23 verbunden. Zwischen der einen Fläche 24 des Halters 4 und der mit der einen Stirnfläche 22 verbundenen Fläche der Apertur 6 ist das frequenzverdoppelnde Element 5, ein an sich bekannter nichtlinearer optischer Kristall, angeordnet. Der innige Kontakt des Elementes 5 einerseits mit dem Halter 4 und andererseits mit der thermisch gut leitenden Apertur 6 bewirkt eine gute Wärmeableitung bzw. -verteilung für das Element 5.

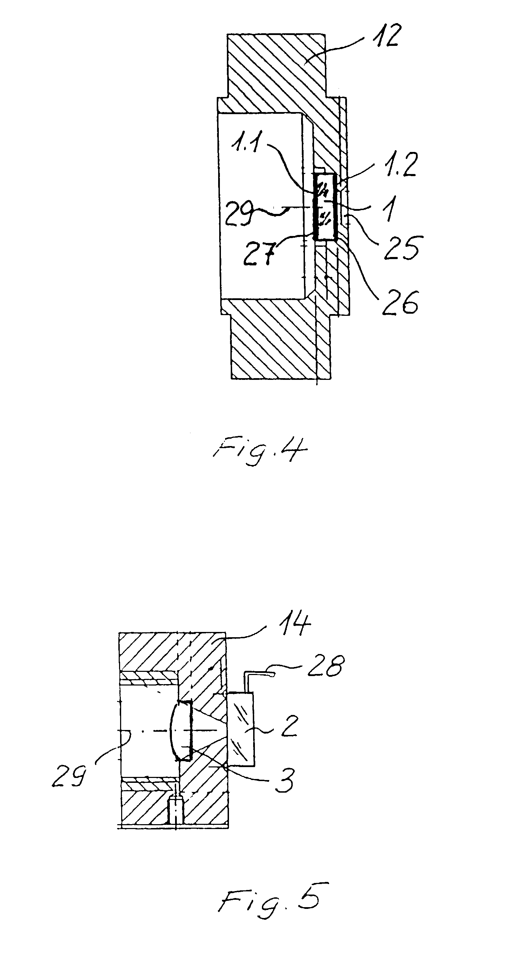

Fig.4 zeigt die Anordnung des lasenden Festkörpermediums 1 (Laserkristall) in einem dafür vorgesehenen Halter 12, dessen Lichteintrittsöffnung 25 der Pumplichtquelle 2 zugewandt ist (vgl. Fig.1 und Fig.5). Die Stirnflächen 26 und 27 sind vorteilhaft mit optisch wirksamen Beschichtungen 1.1 und 1.2 belegt. So ist z.B. die Stirnfläche 26, die der Pumplichtquelle zugewandt ist, mit einer für die Pumpstrahlung hoch durchlässigen Beschichtung 1.2 und die Stirnfläche 27 mit einer die Laserstrahlung hoch reflektierenden Beschichtung 1.1 versehen.

Fig.5 zeigt den Aufbau der Pumpeinrichtung, die aus einem Peltierelement 14 und einer Pumplichtquelle 2, beispielsweise in Form einer Laserdiode 13 (vgl. Fig.2) oder einer anderen geeigneten Lichtquelle, besteht. Über Anschlüsse 28 wird die Pumplichtquelle 2 mit Strom versorgt. Die von der Pumplichtquelle 2 ausgehende Strahlung wird über nachgeordnete optische Mittel 3, die in der Fig.5 als Linse dargestellt sind, dem Laserkristall (Festkörpermedium 1) zugeführt. Das Peltierelement 14 dient der Einstellung der Temperatur der Pumplichtquelle 2 und der gesamten Laserkavität, um einen Betrieb in einem Temperaturbereich zu ermöglichen, in welchem der Rauschpegel der ausgesendeten Strahlung am geringsten ist.

Bei der erfindungsgemäßen Lasereinrichtung (vgl. Fig.2) sind die Pumpeinrichtung, der Halter 12 für den Laserkristall und der Halter 4 für das frequenzverdoppelnde Element 5 fluchtend zur optischen Achse 29 angeordnet. Es ist von Vorteil, wenn das lasende Festkorpermedium 1 und das frequenzverdoppelnde Element 5 in einem engen thermischen Kontakt mit einer einzigen Apertur 6 stehen (in den Figuren nicht dargestellt) Damit wird eine besonders vorteilhafte Temperatureinregelung und -einstellung bei einem Wert erzielbar, bei welchen das Rauschen der Ausgangsstrahlung des Lasers einen minimalen Betrag besitzt. Dieser Temperaturwert wird bei dem erfindungsgemäßen Festkörperlaser bei der Montage eingestellt und während des Laserbetriebs mit Hilfe des Peltierelementes 14 oder einer anderen geeigneten Anordnung aufrechterhalten. Das räumliche "Lochbrennen" (spatial-hole-burning) wirkt sich bei einem Laser mit einer erfindungsgemäßen Apertur 6 nicht negativ auf das Rauschverhalten aus.

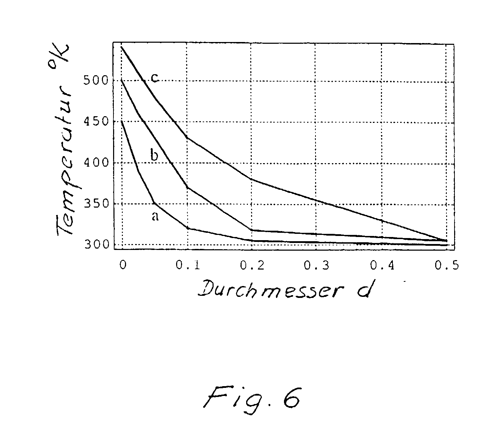

In Fig.6 ist der Temperaturverlauf über dem Durchmesser d der Öffnung 7 der Apertur 6 (vgl. Fig.1) für unterschiedlich große Öffnungen 7 dargestellt, wobei a = 0,1 mm; b = 0,25 mm und c = 0,5 mm sind.

Eine Verbesserung ergibt sich durch die wirksame Kühlung bei Verwendung einer thermisch gut leitenden Apertur 6, die in einen guten Kontakt mit dem frequenzverdoppelnden Kristall oder dem Laserkristall gebracht ist. Es ist erkennbar, daß die Temperatur in der Mitte der betreffenden Kristalle bei vorhandener thermisch leitender Apertur 6 im wesentlichen von den Abmessungen der Öffnung 7 der Apertur 6 abhängt, nicht aber von der Umgebungstemperatur. Auf diese Weise ist eine Thermostatisierung, wie z.B. beim Stand der Technik (US-Patentschrift 4,933,947), nicht erforderlich.

## Patentansprüche

1. Frequenzverdoppelter diodengepumpter Festkörperlaser mit resonatorinterner Frequenzverdopplung, umfassend ein lasendes Festkörpermedium (1) mit geeigneten reflektierenden Belägen, welches einen Bestandteil einer Resonatorkavität darstellt, mindestens eine als Laserdiode ausgebildete Pumplichtquelle zur Erzeugung geeigneter Pumplichtstrahlung, ein frequenzverdoppelndes nichtlineares optisches Element (5) in Form eines nichtlinearen Kristalls mit geeigneten reflektierenden Beschichtungen, welches einen weiteren Bestandteil der Resonatorkavität bildet, wobei die Resonatorkavität zwischen reflektierenden Beschichtungen des Festkörpermediums (1) und des frequenzverdoppelnden Elements (5) gebildet ist und optische Mittel (3), die der Pumplichtquelle nachgeordnet sind und die Pumpstrahlung an das lasende Festkörpermedium (1) leiten, **dadurch gekennzeichnet**, daß jeweils mindestens eine Apertur (6) aus thermisch leitendem Material am frequenzverdoppelnden Element (5) und/oder am lasenden Festkörpermedium (1) vorgesehen ist, und daß das frequenzverdoppelnde optische Element (5) für eine Phasenanpassung bei einer höheren Temperatur als die Temperatur der Umgebung ausgelegt ist.

2. Festkörperlaser nach Anspruch 1, dadurch gekennzeichnet, daß die mindestens eine thermisch leitende Apertur (6) so dimensioniert ist, daß ein einzelner transversaler Moden TEM₀₀ realisiert ist.

3. Festkörperlaser nach Anspruch 1 und 2, dadurch gekennzeichnet, daß jeweils eine thermisch leitende Apertur (6) auf beiden Flächen des frequenzverdoppelnden Elementes (5) angeordnet ist.

4. Festkörperlaser nach Anspruch 1 und 2, dadurch gekennzeichnet, daß das lasende Festkorpermedium (1) und das frequenzverdoppelnde Element (5) in einem thermischen Kontakt mit einer thermisch leitenden Apertur (6) stehen.

5. Festkörperlaser nach mindestens einem der Ansprüche 1 bis 4, dadurch gekennzeichnet, daß das lasende Festkorpermedium (1) aus Nd:YAG; Nd:YAP; Nd:YVO₄; Nd:GdWO₄; Nd:LSB und ähnlichen Materialien besteht.

6. Festkörperlaser nach mindestens einem der vorgenannten Ansprüche, dadurch gekennzeichnet, daß das frequenzverdoppelnde Element (5) vorzugsweise aus KTP; KDP; LBO; LBO; ADP oder LilO₃ besteht.

7. Festkörperlaser nach Anspruch 1, dadurch gekennzeichnet, daß die optischen Mittel (3) optische Linsen sind, welche die Pumpstrahlung von der Pumplichtquelle (2) zum lasenden Festkörpermedium (1) leiten.

8. Festkörperlaser nach mindestens einem der vorgenannten Ansprüche, dadurch gekennzeichnet, daß das lasende Festkörpermedium (1) und das frequenzverdoppelnde Element (5) in thermischem Kontakt mit einer einzigen gemeinsamen Apertur (6) stehen.

## Claims

1. A frequency-doubled diode-pumped solid laser with resonator-internal frequency doubling, comprising a lasing solid medium (1) with suitable reflecting coatings, which medium (1) constitutes a constituent part of a resonator cavity, at least one pumped light source, constructed as a laser diode, for generating suitable pumped light radiation, a frequency-doubling non-linear optical element (5) in the form of a non-linear crystal with suitable reflecting coatings, which element (5) forms a further constituent part of the resonator cavity, the resonator cavity being formed between reflecting coatings of the solid medium (1) and of the frequency-doubling element (5), and optical means (3), which are disposed downstream of the pumped light source and guide the pumped radiation to the lasing solid medium (1), characterised in that at least one aperture (6) of thermally conductive material is provided respectively at the frequency-doubling element (5) and/or at the lasing solid medium (1), and in that the frequency-doubling optical element (5) is designed for a phase matching at a higher temperature than the temperature of the surroundings.

2. A solid laser according to claim 1, characterised in that the at least one thermally conductive aperture (6) is so dimensioned that a single transverse mode TEM is obtained.

3. A solid laser according to claims 1 and 2, characterised in that a thermally conductive aperture (6) is disposed on each of the two surfaces of the frequency-doubling element (5).

4. A solid laser according to claims 1 and 2, characterised in that the lasing solid medium (1) and the frequency-doubling element (5) are in thermal contact with a thermally conductive aperture (6).

5. A solid laser according to at least one of claims 1 to 4, characterised in that the lasing solid medium (1) consists of Nd:YAG; Nd:YAP; Nd:YVO₄; Nd:GdWO4; Nd:LSB and similar materials.

6. A solid laser according to at least one of the preceding claims, characterised in that the frequency-doubling element (5) preferably consists of KTP; KDP; LBO; LBO; ADP or LilO₃.

7. A solid laser according to claim 1, characterised in that the optical means (3) are optical lenses which guide the pumped radiation from the pumped light source (2) to the lasing solid medium (1).

8. A solid laser according to at least one of the preceding claims, characterised in that the lasing solid medium (1) and the frequency-doubling element (5) are in thermal contact with a single common aperture (6).

## Revendications

1. Laser à solide à pompage par diode et à doublage de fréquence avec doublage de fréquence interne au résonateur, comprenant un milieu solide (1) à activité laser avec garnitures réfléchissantes appropriées et qui fait partie intégrante d'une cavité de résonateur, au moins une source lumineuse de pompage, conçue comme diode laser, destinée à produire un rayonnement lumineux de pompage approprié, un élément optique (5) non linéaire doublant la fréquence, sous la forme d'un cristal non linéaire avec revêtements réfléchissants appropriés et qui fait aussi partie intégrante de la cavité de résonateur, la cavité de résonateur étant formée entre des revêtements réfléchissants du milieu solide (1) et l'élément (5) doublant la fréquence, ainsi que des moyens optiques (3) qui sont montés en aval de la source lumineuse de pompage et qui guident le rayonnement de pompage jusqu'au milieu solide (1) à activité laser, caractérisé en ce qu'il est prévu dans chaque cas au moins une ouverture (6) en matière thermiquement conductrice sur l'élément (5) doublant la fréquence et/ou sur le milieu solide (1) à activité laser, et en ce que l'élément optique (5) doublant la fréquence est conçu pour un accord de phase dans le cas où la température est supérieure à la température ambiante.

2. Laser à solide selon la revendication 1, caractérisé en ce que la ou les ouverture(s) (6) thermiquement conductrice(s) est (sont) dimensionnée(s) de manière que soit réalisé un mode transversal TEM₀₀ individuel.

3. Laser à solide selon les revendications 1 et 2, caractérisé en ce qu'une ouverture (6) thermiquement conductrice est disposée sur chacune des deux surfaces de l'élément (5) doublant la fréquence.

4. Laser à solide selon les revendications 1 et 2, caractérisé en ce que le milieu solide (1) à activité laser et l'élément (5) doublant la fréquence sont en contact thermique avec une ouverture (6) thermiquement conductrice.

5. Laser à solide selon au moins une des revendications 1 à 4, caractérisé en ce que le milieu solide (1) à activité laser est en Nd:YAG ; Nd:YAP ; Nd:YVO₄ ; Nd:GdWO₄ ; Nd:LSB et en matières similaires.

6. Laser à solide selon l'une au moins des revendications précédentes, caractérisé en ce que l'élément (5) doublant la fréquence est de préférence en KTP ; KDP ; LBO ; ADP ou en LilO₃.

7. Laser à solide selon la revendication 1, caractérisé en ce que les moyens optiques (3) sont des lentilles optiques qui guident le rayonnement de pompage de la source lumineuse de pompage (2) vers le milieu solide (1) à activité laser.

8. Laser à solide selon l'une au moins des revendications précédentes, caractérisé en ce que le milieu solide (1) à activité laser et l'élément (5) doublant la fréquence sont en contact thermique avec une seule ouverture (6) commune.
